# DEMANDE DE BREVET EUROPEEN

(11) **EP 1 262 107 A2**
(43) Date de publication de la demande: **04.12.2002**
(21) Numéro de dépôt: 02370022.2
(22) Date de dépôt: 24.05.2002
(51) Int. Cl.: A23L 1/304, A23L 1/212

(54) **Aliment diététique**

(30) Priorité: 28.05.2001 FR 0107022
(71) Demandeur: Aboudiab, Taan, 80200 Peronne (FR)
(72) Inventeur: Aboudiab, Taan, 80200 Peronne (FR)
(74) Mandataire: Hennion, Jean-Claude

(57) **Abrégé**

Aliment diététique destiné aux sujets intolérants aux protéines du lai ou ayant une alimentation pauvre en produits laitiers, cet aliment comprenant une compote ou une purée de fruit contenant un sel de calcium et notamment un phosphate de calcium.

## Description

L'invention se rapporte à un aliment diététique pour améliorer la qualité de vie des sujets intolérants aux protéines du lait.

Certains enfants sont allergiques aux protéines du lait de vache.

Ce trouble apparaît dans la grande majorité au cours de la première année et peut durer plusieurs années parfois jusqu'à l'age adulte.

Les symptômes sont variés : diarrhées, vomissements, éruptions cutanées, douleurs abdominales, anémie, dermatite atopique.

L'allergie aux protéines du lait est en nette augmentation dans les pays industrialisés ces vingt dernières années et son étiopathogénie n'est pas encore totalement élucidée.

L'allergie impose la suppression du lait sous toutes ses formes :
- lait pour nourrissons,
- lait de vache liquide, concentré ou en poudre,
- lait de chèvre ou de brebis, du fait d'allergènes communs,
- dérivés du lait : yaourt, fromage blanc, crème fraîche, beurre, desserts lactés.

La majorité des produits existants sur le marché s'adressent aux enfants tolérants les protéines du lait et sont à base de produits laitiers.

Aucune solution pratique et économique n'est fournie aux sujets allergiques aux protéines de lait et la demanderesse a notamment constaté que beaucoup d'enfants et d'adultes intolérants aux protéines du lait ne se préoccupent pas assez de leur apport journalier en calcium.

L'invention permet de remédier à cet inconvénient. L'aliment diététique selon l'invention permet d'absorber une quantité non négligeable de calcium en même temps qu'un apport calorique nécessaire à maintenir un équilibre alimentaire chez les personnes déjà fragilisées par l'impossibilité de consommer les produits de première nécessité à base de lait et de ses dérivés.

Dans une réalisation, l'aliment diététique est à base de compote à base d'un seul fruit (par exemple, pomme, fraise, framboise, pêche, abricot) ou un mélange de deux ou plusieurs fruits précités. Avantageusement, ces compotes ne contiennent ni colorant, ni conservateur, ni arôme ajouté. Par contre, elle peuvent contenir un antioxydant et être légèrement sucrées.

A titre d'exemple non limitatif, le conditionnement peut être dans des pots de cent grammes de compote enrichie par deux cents milligrammes de calcium. Avantageusement, le calcium se trouve sous forme de sel de phosphate de calcium, la demanderesse ayant constaté que cette forme minérale influence positivement la densité minérale et la taille osseuse.

La demanderesse a constaté que le phosphate de calcium n'est absorbé qu'à 30 % environ par les intestins.

Pour remédier à cet inconvénient, une supplémentation en vitamine D à environ 1,25 micro-grammes (équivalent à 50 unités internationales) par 100 grammes de compote peut être avantageusement ajoutée à la compote.

A titre d'exemple, l'aliment diététique selon l'invention est particulièrement destiné aux sujets intolérants aux protéines du lait ou ayant un régime pauvre en produits laitiers, en particulier les enfants et les adolescents.

## Revendications

1. Aliment diététique destiné aux sujets intolérants aux protéines de lait ou ayant une alimentation pauvre en produits laitiers, **caractérisé en ce qu'**il comprend une compote ou une purée de fruit contenant un sel de calcium.

2. Aliment diététique selon la revendication 1, **caractérisé en ce que** le sel de calcium est un phosphate de calcium.

3. Aliment diététique selon la revendication 1 ou 2, **caractérisé en ce qu'**il comprend environ deux cents milligrammes de calcium pour cent grammes de compote ou purée de fruit.

4. Aliment diététique selon l'une quelconque des revendications 1 à 3, **caractérisé en ce qu'**il comporte en outre un ajout de vitamine D.

5. Aliment diététique selon la revendication 4, **caractérisé en ce qu'**il comprend un ajout de 1,25 micro-grammes de vitamine D pour 100 grammes de compote ou de purée de fruit.

6. Aliment diététique selon l'une quelconque des revendications 1 à 5, **caractérisé en ce qu'**il comprend un antioxydant.

7. Aliment diététique selon la revendication 6, **caractérisé en ce que** l'antioxydant comprend de l'acide ascorbique.
